# EUROPEAN PATENT SPECIFICATION

(11) **EP 1 747 152 B1**
(45) Date of publication and mention of the grant of the patent: **12.10.2011**
(21) Application number: 05851159.3
(22) Date of filing: 04.04.2005
(51) Int. Cl.: B65D 59/04, B65D 3/04, B65H 75/18

(54) **REMOVABLE IDENTIFICATION DEVICE FOR MULTILAYER TUBULAR STRUCTURES**
ABNEHMBARE IDENTIFIZIERUNGSVORRICHTUNG FÜR MEHRSCHICHTIGE RÖHRENFÖRMIGE STRUKTUREN
DISPOSITIF D'IDENTIFICATION AMOVIBLE POUR STRUCTURES TUBULAIRES MULTICOUCHES

(30) Priority: 05.04.2004 US 818124
(43) Date of publication of application: 31.01.2007
(73) Proprietor: Sonoco Development, Inc., Hartsville, South Carolina 29550 (US)
(72) Inventor: BELLUM, Cliff, Hartsville, SC 29550 (US); LOWRY, James, Franklin, TN 31069 (US)
(74) Representative: Moreland, David
(86) International application number: PCT/US2005/011448
(87) International publication number: WO 2006/057657

(56) References cited:
- GB-A- 2 333 207
- US-B1- 6 481 631
- US-B1- 6 488 212

## Description

### BACKGROUND OF THE INVENTION

The present invention relates to "smart packaging" systems and methods, and more particularly to electronic detection devices, such as radio frequency identification devices ("RFID" tags or devices hereinafter) and methods of using these devices in packaging and package tracking systems.

Monitoring the location and status of items is advantageous in many applications. For example, in manufacturing environments it is important to know the whereabouts of items in a factory, and in transportation environments it is important to identify and document the coming and going of items from a warehouse or the like. Bar codes have traditionally been used to identify and track items. In particular, 1D bar codes are most common and are used to identify items at the grocery store, etc. More recently, 2D bar codes have been developed and provide substantially more information than 1D bar codes. Thus, 2D bar codes are used with shipping labels and other items where more information is typically needed to identify the item(s) associated with the bar code. However, 1D and 2D bar code systems are often not compatible with one another, and the bar code must be clearly visible and readable by a scanner or the like in order to transfer the information associated with the bar code.

Another method for tracking an item and/or transferring information about an item is through a magnetic strip having pre-programmed coded information that is attached to an outer surface of an item. The information is read by passing the magnetic strip through a high-resolution magnetic reader to produce an electric field. While this technology does not require a clear line-of-sight between the reader and the strip for proper reading of the information, the distance at which the strip can be read is limited, and the system is limited to read-only. The magnetic strips are also prone to damage, which can be a problem for longer magnetic strips that contain more data.

Another way to track items is through the use of RFID. RFID has been used for some time in a variety of applications, from tracking garments to pallets to trucks. RFID works on an inductive principle. In a passive RFID system, a reader generates a magnetic field at a predetermined frequency. When a RFID tag, which can be usually categorized as being read-only or read/write, enters the magnetic field, a small electric current forms in the tag's resonant circuit, which includes a coiled antenna and a capacitor. This circuit provides power to the RFID tag, which then modulates the magnetic field in order to transmit information that is pre-programmed on the tag back to the reader at a predetermined frequency, such as 125kHz (low frequency) or 13.56MHz (high frequency). The reader then receives, demodulates, and decodes the signal transmission, and then sends the data onto a host computer associated with the system for further processing.

An active RFID system operates in much the same way, but in an active system the RFID tag includes its own battery, allowing the tag to transmit data and information at the touch of a button. For example, a remote control garage door opener typically uses an active RFID tag that transmits a predetermined code to the receiver in order to raise and lower the garage door at the user's discretion.

Another technology that is related to RFID tags is known as Bistatix, which operates much the same way as RFID tags except that the coiled antenna and capacitor of the RFID tags have been replaced by a printed, carbon-based material. As a result, a Bistatix tag is extremely flat and relatively flexible, although currently these types of devices are limited to a frequency range of about 125KHz. In addition, the read range of a Bistatix tag is dependent on size, so for long read ranges a very large tag may be required. Regardless, whether a Bistatix, active, or passive RFID tag is used in a particular tracking system, these tags and systems have greatly advanced package tracking and data management.

One of the challenges that exist with electronic detection devices, and with RFID systems in particular, is how to apply a RFID tag to an item. Currently tags are glued to an outer surface of a container or pallet, and while this method is satisfactory for many applications, the prominent location of the tag often leaves the tag exposed and subject to damage or inadvertent removal during processing. Other types of tag applications include sewing tags into a garment and clipping tags to an item with metal fasteners. The difficulties in applying a detection device is particularly pronounced when applying such devices or tags to tubular rolls or containers, such as those used in supporting roll goods or for packaging food products, as these types of structures often rub against one another during production and thereby cause damage to the tags. Examples are known from US 6481631, US6488212 or 63233207. In addition, reusable carriers or containers are often used for many cycles, such as in doffing and creeling textile yam, which can further accelerate damage to the RFID tag. Thus, there is a need to manufacture a container or carrier having an electronic detection device that will not be damaged or destroyed during processing.

Another problem facing RFID technology is the cost associated with wasting RFID tags, particularly when used with objects with a relatively short lifespan. For example, tubular core that are used with roll goods are often made out of paperboard stock and are recycled after being damaged or worn. Conventional RFID tags that are glued to the core are destroyed when the core is recycled, even though the tag can be used for a much longer period. Thus, there is a need for an RFID tag that can be recycled when the lifespan of the object it is associated with is over.

### BRIEF SUMMARY OF THE INVENTION

These and other needs are provided by the tubular structure and methods of forming the tubular structure according to the present invention. Advantageously, the tubular structure of the present invention includes a tubular core and an electronic detection or identification device, such as a radio frequency identification device or tag, which is releasably associated with the tubular core by a resiliently flexible band or sheet. The flexible band is biased against the inside of the core or about the outer surface of the core, and the detection device is interposed between the band and the core. In this manner, the detection device is protected from damage by the band, and the detection device can be removed from the core if the core is recycled or the like. In another embodiment, the detection device is attached to the flexible sheet that is itself biased against the inner surface of the core and held in place by a frictional or interference fit. The sheet and detection device can be removed when the core is recycled.

Methods of manufacturing tubular structures for storing products are also provided, wherein the resiliently flexible sheet or band is biased to form an interference fit with the tubular core. A detection device is in contact with the flexible sheet or band, and is releasably secured during the biasing step.

The tubular structure of the present invention has many uses. Because the identification device is protected by the flexible band or sheet, there is less risk of damage or breakage from being hit or bumped during processing of the products or movement of the core. In addition, the flexible band or sheet and the identification device can be removed, such as if the core is recycled. The tubular structure is particularly useful for tracking products that are stored on or therein, such as cookies, potato crisps, roll goods, and the like. The methods of the present invention do not require special construction techniques, end caps, or special grooves cut into portions of the tubular structure, all of which can decrease manufacturing efficiency and increase manufacturing costs.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
Figure 1 is a side perspective view of a tubular structure according to one embodiment of the present invention;
Figure 2 is a side perspective view of a tubular core of the tubular structure shown in Figure 1;
Figure 3 is a cross-sectional view of a flexible band according to one embodiment of the present invention;
Figure 4 is a cross-sectional view of an alternative arrangement for a flexible band according to one embodiment of the present invention;
Figure 5 is a cross-sectional view of another alternative arrangement for a flexible band according to one embodiment of the present invention; and
Figures 6-10 are process diagrams of using a tubular structure according to the present invention.

### DETAILED DESCRIPTION OF THE INVENTION

The present inventions now will be described more fully hereinafter with reference to the accompanying drawings, in which some, but not all embodiments of the invention are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

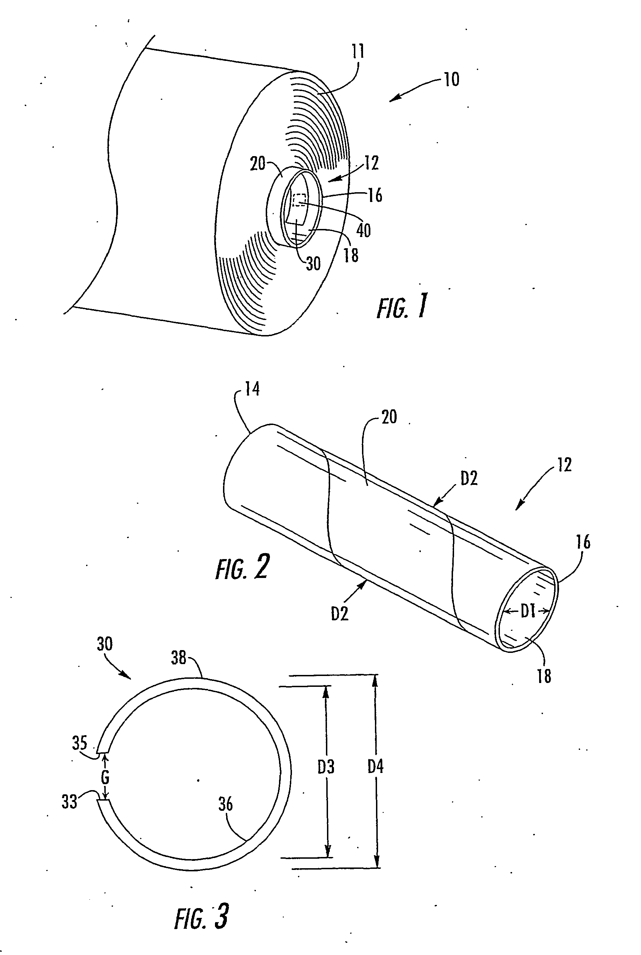

Figures 1 and 2 show a tubular structure **10** for storing goods or products **11** according to one embodiment of the present invention that comprises a tubular core **12** having inner and outer surfaces **18, 20** and opposed ends **14,16.** Such tubular bodies are used as containers for packaging products, such as cookies and potato crisps, and as winding cores for supporting products wound around the outer surface of the tube, such as textiles, paper goods, and the like (as shown in Figure 1). The term "tubular structure" is used herein to denote both containers and winding cores, noting that the advantageous features of the present invention may exist in each type of tubular body.

In one embodiment, the tubular core **12** is formed from multiple plies or layers of flexible material, such as paperboard, wrapped one upon another about an axis of the tubular core and adhered together in a radially layered construction. The tubular core **12** can also be formed from other materials, such as plastics or composite materials. The inner surface **18** of the tubular core **12** defines an inner diameter **D1,** while the outer surface **20** defines an outer diameter **D2.** The thickness of the tubular core **12** is primarily a function of the products stored in or on the core, as well as the processing and use of the core. As such, the thickness of the core **12** may be from about 0,925cm (0.1 inch) to about 7,62cm (3.0 inches) although the thickness may be greater or less than this range as desired. The length of the core **12** is also subject to the particular use of the core and the products associated therewith. Typically, containers for packaging products are about 30,5 cm (1 foot) in length, while cores used with roll goods can be up to 152cm (5 feet) and longer. The features and advantages of the tubular structure **10,** however, can be achieved regardless of the particular thickness and length of the core **12.** Figure 1 also shows a resiliently flexible band or sheet **30** for securing an electronic detection or identification device **40,** as discussed below.

More specifically, Figure 3 shows a resiliently flexible band or sheet **30** that is releasably secured to the core **12** in one of several ways. In particular, the band **30** has opposing side edges **33, 35** and inner and outer surfaces **36, 38.** The band **30** may be formed from a variety of materials, including polymers, metals, composites, and fibrous materials, such as paperboard. It should be noted that the term "band" and the term "sheet" refer to the same structure and can be interchanged. However, the terms will be used in a manner that reflects a particular arrangement most accurately. In this regard, the band **30** shown in Figure 3 is curled into a generally cylindrical form so that the opposing side edges **33, 35** are proximate one another. It is possible that the side edges **33, 35** may be in contact with one another, although preferably a small gap is present therebetween. The band **30** forms an inner diameter **D3** and an outer diameter **D4** that are sized according to the particular application.

For example, in one embodiment the inner diameter **D3** of the band **30** is sized to be less than the outer diameter **D2** of the core **12,** such that when the band is stretched or biased about the core, the side edges **33, 35** spread slightly and an interference or frictional fit is formed between the band and core. In this example, the identification device **40** is interposed between the inner surface **36** of the band **30** and the outer surface **20** of the core **12** and is held in place by the interference fit. In another example, the outer diameter **D4** of the band **30** is sized to be slightly more than the inner diameter **D1** of the core **12,** such that when the band is compressed or biased within the core, the side edges **33, 35** draw nearer one another and an interference fit is formed between the band and the core. In this example, the identification device **40** is interposed between the outer surface **38** of the band **30** and the inner surface **18** of the core **12** and held in place by the interference fit. In each example, the band **30** (and preferably the identification device **40)** can be inserted into or about the core **12** at any position along the length of the core, yet still be removed from the core **12** and reused in other applications. The band **30** may also be color-coded or include text to more easily identify the particular products, core, customer, or other such information.

The identification device **40** is preferably a radio frequency identification (RFID) device that is capable of storing and transmitting data associated with the tubular structure **10,** the products **11** stored in or on the structure, or both. Examples of such data and other data that can be stored, transmitted to and from, and deleted from the identification device **40** includes product ID, technical data, quality control information, code dating, location, and order status. Information can also be deleted, which includes overwriting, erasing, substituting, and disabling, so that the identification device **40** can be re-used for additional products or goods. These types of features allow for improved inventory management, inventory control, in-house product location, and supply chain management.

The identification device **40** can have many shapes and configurations, but according to one embodiment the device is relatively thin and flat, and includes a coiled antenna and a capacitor that respond to magnetic fields, such as presented by radio frequency transmitters. Such RFID devices or tags are known and available from a variety of manufacturers, such as Motorola® and Texas Instruments®. The coiled antenna of the identification device **40** is typically made from metal, although printed carbon-based materials may also be used. As discussed above, the location of the identification device **40** is determined by the location of the flexible band or sheet **30,** although preferably the identification device **40** is located near one of the ends **14, 16** of the core **12** so that it can be easily removed and be in more direct proximity to surrounding electronic transmitters.

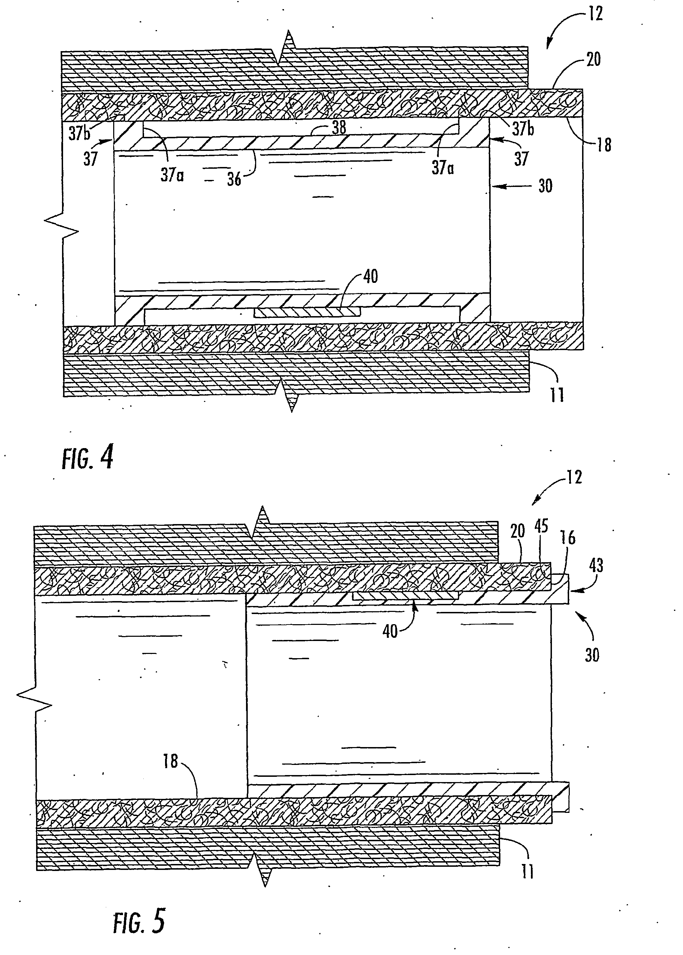

Figures 4 and 5 illustrate alternative arrangements between the core **12,** band **30,** and identification device **40.** In particular, Figure 4 shows one embodiment of the band **30** whereby the band includes opposing flanges **37** at the ends **32, 34** thereof. The flanges **37** include sides **37a** and **37b,** which are shown as being approximately perpendicular to one another, although the angle formed by the sides can be different, including a more curved transition between the sides. The sides **37b,** however, form the interference fit between the band **30** and the inner surface **18** of the core **12,** so enough surface area of the sides **37b** must be presented as well as sufficient diameter of the band **30** in order to accomplish sufficient friction. The sides **37** define the outer surface **38** of the band **30** as a relief or recess, and the identification device **40** is positioned in the recess and is held between the sides **37.** Depending on the depth of the recess and the thickness of the identification device **40,** the identification device may be free to move freely about the recess.

Figure 5 shows another embodiment of the band **30** whereby the band includes a flange **43** that includes surface **45** that fits against one end **16** of the core **12** and prevents further insertion of the band **30** into the core. Preferably, the surface **45** extends radially no greater than the outer surface **20** of the core **12** and is flush therewith, although the surface **45** may extend greater or less than the outer surface of the core, depending on the needs and circumstances. Advantageously, the flange **43** may include color and/or text so that information can be easily seen. In addition, the flange **43** assists in easy removal of the band **30** from the core **12,** as well as indicating that the core **12** has a band **30** already inserted therein. As described generally above, the identification device **40** is interposed between the band **30** and the inner surface **18** of the core **12** and is held by the interference fit between the band and the core.

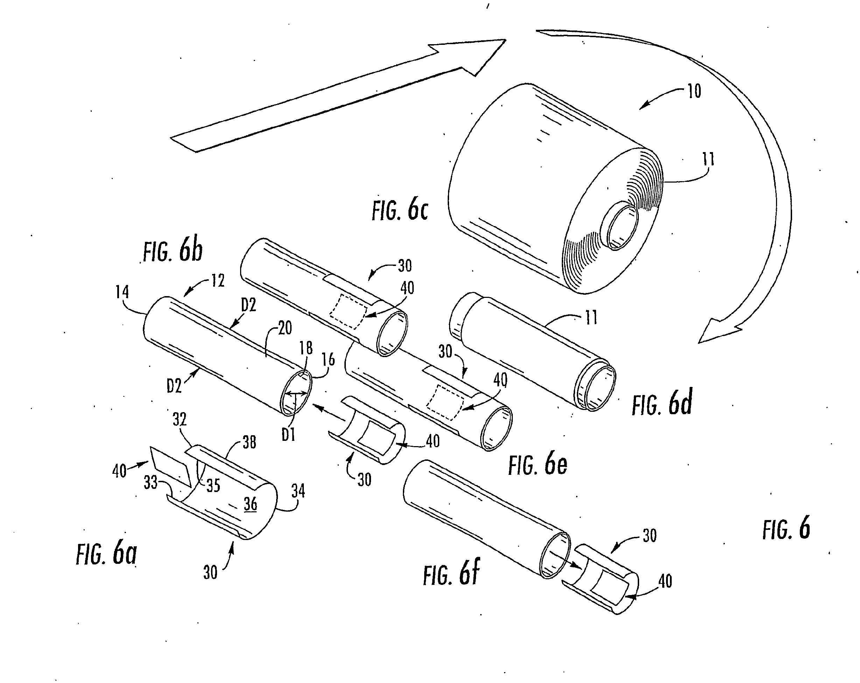

Figures 6-10 illustrate various methods of installing the band **30** and identification device **40** in conjunction with the tubular structure **10** of the present invention. In addition, Figures 6-10 illustrate how the core **12,** band **30,** and identification device **40** can be recycled or reused for future applications. Referring specifically to Figure 6, step **6A** includes attaching or placing the identification device **40** to the band **30,** such as by positioning the identification device against the inside surface **36** of the band. Step **6B** includes positioning the band **30** and identification device **40** about the outer surface **20** of the core **12** such that the identification device is interposed between the band and the core. Step **6C** includes winding the material or product **11** about core **12** and over the band **30.** Step **6D** includes using the product **11** or otherwise removing a majority of the product. If any leftover product remains, step **6E** includes removing the excess or leftover product **11** so that the band **30** is exposed. Step **6F** includes sliding or otherwise removing the band **30** and identification device **40** from the core **12,** whereafter the core may be repulped or recycled, and the band **30** and identification device **40** may be reused in future applications. During the steps of Figure 6, information can be stored, transferred, and deleted from the identification device **40** as is known in the art. Advantageously, the band **30** protects the identification device **40** from damage and abuse during the process steps and transportation. This is particularly advantageous when the leftover material or product is removed, as typically the removal is performed by cutting the material from the core **12** using a **knife,** which could damage the identification device **40** if not for the band **30.**

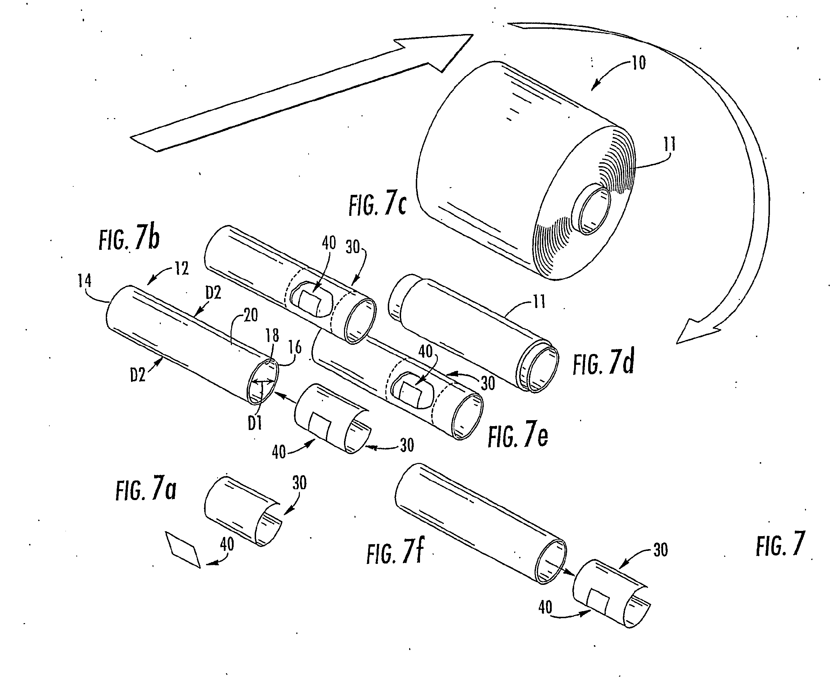

Figure 7 illustrates another method according to the present invention, wherein Figure **7A** includes attaching or positioning the identification device **40** to the outer surface **38** of the band **30.** Step **7B** includes positioning the band **30** and the identification device **40** inside the core **12** such that the identification device is interposed between the outer surface **38** of the band **30** and the inner surface **18** of the core **12.** Step **7C** includes winding the material or product **11** about core **12.** Step **7D** includes using the product **11** as described above, which depletes the product remaining on the core **12.** Step **7E** includes removing the excess or leftover product **11,** and step **7F** includes sliding or otherwise removing the band **30** and identification device **40** from the core **12** in order to facilitate reuse and/or recycling.

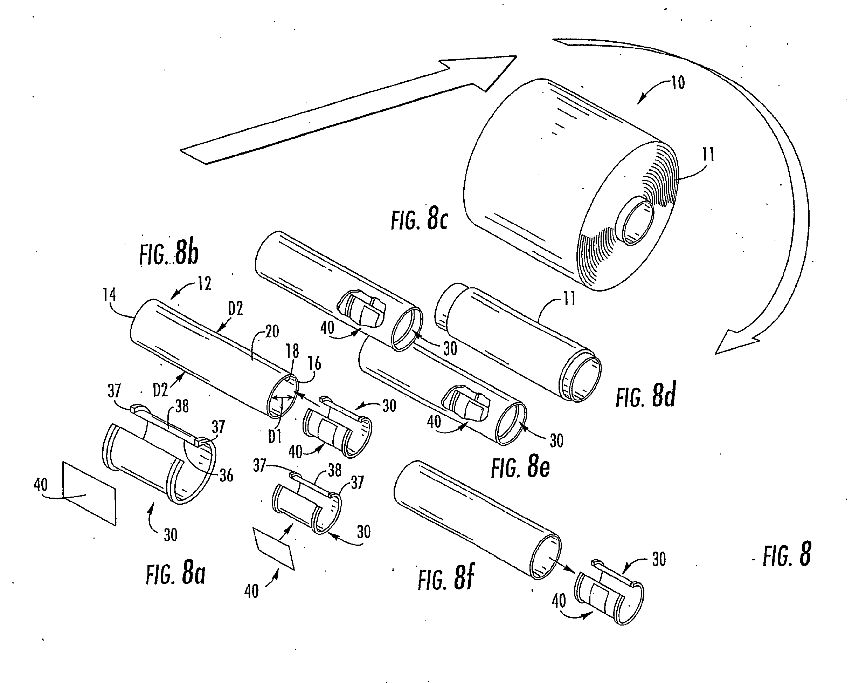

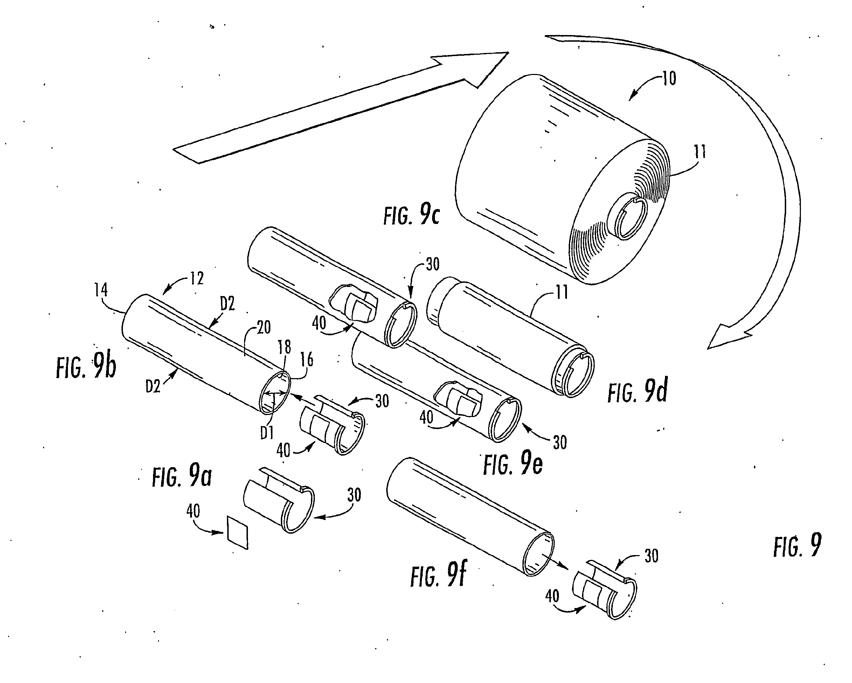

Figure 8 illustrates another embodiment according to the present invention, wherein steps **8A-8F** are performed in a manner described above for Figure 7, but in this embodiment the band **30** includes the opposing flanges **37** so that the identification device **40** is located in the recess defined by the outer surface **38** and the flanges **37** of the band. Similarly, Figure 9 illustrates another embodiment of the present invention, wherein steps **9A-9F** are performed in a manner described above for Figure 7, but in this embodiment the band **30** includes the flange **43** that registers with the end **16** of the core **12** as described above wherein the identification device **40** is interposed between the band **30** and the inner surface **18** of the core **12.**

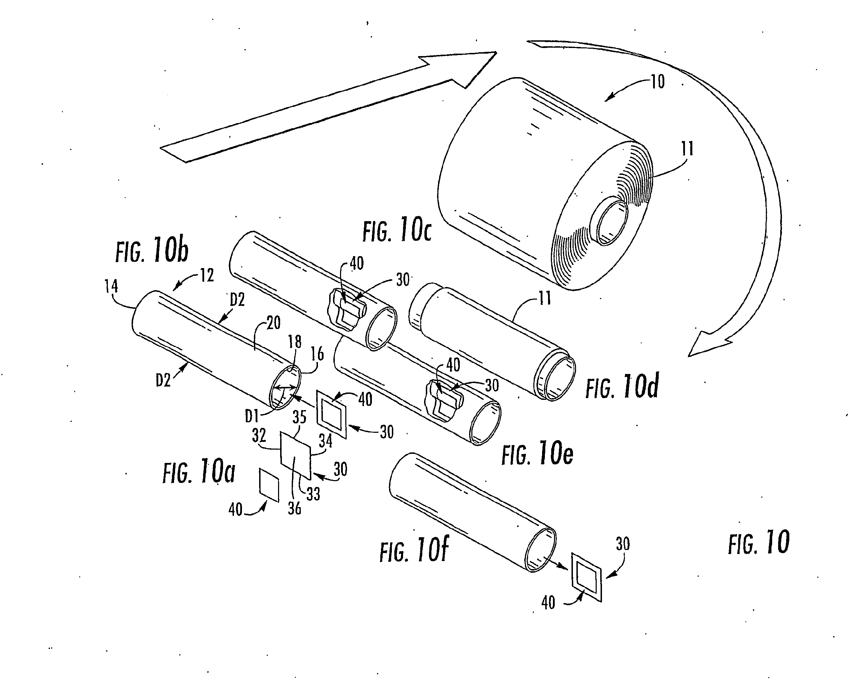

Figure 10 illustrates yet another embodiment of the present invention. While most of the steps **10A-10F** are similar to the steps of Figures 6-9, the identification device **40** in this embodiment is attached to a resiliently flexible sheet 30 that has opposing ends **32, 34** and side edges **33, 35.** The distance between the side edges **33, 35** of the sheet **30** is greater than the inner diameter **D1** of the core **12,** so in order the position the sheet **30** inside the core, the sheet is biased, e.g., bowed, compressed, squeezed, or the like, so that the opposing side edges **33, 35** are biased against the inner surface **18** of the core **12** and releasably secured thereto by an interference fit. The natural tendency of the sheet **30** to straighten to an unbiased shape maintains the interference fit with the core **12.** The identification device **40** is attached to one side 36 of the sheet 30, such as by adhesive or the like, and can be removed from the sheet at the end of the process cycle, as shown in step **10F.**

Accordingly, the present invention provides an advantageous system for recording information about products and or structures relating thereto. The flexible sheet or band **30** provides protection to the identification device **40** while also being able to convey information itself by including color and/or text in the design of the band **30.** The present invention limits the amount of waste by allowing the band and identification device to be recycled or reused for future applications, while the core **12** may be repulped or recycled independently. Because the lifespan of the core **12** is significantly less than that of the identification device **40** and band 30, the present invention reduces cost in the production of new cores. At the same time, the present invention allows for a new identification device to be associated with a core or products if the device were damaged instead of requiring the scrapping of the undamaged core.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A tubular structure (10) for storing products (11), comprising:
a tubular core (12) having inner and outer surfaces (18,20) and opposed ends (14,16) the outer surface defining an outer diameter (D2) of the tubular core; **characterized by** (35,35)
a resiliently flexible band (30) having opposing side edges (33,35) the flexible band being curled into a cylindrical form so that the opposing side edges are proximate one another, the flexible band having an inner diameter (D3) in a relaxed state that is sized to be less than the outer diameter of the tubular core (D2), the flexible band being adapted to be biased about the outer surface of the tubular core and be secured thereto by a frictional fit therebetween; and
a radio frequency identification device (40) interposed between the resiliently flexible band and the tubular core.

2. A tubular structure according to Claim 1, wherein the tubular core is formed from multiple layers of paperboard material wrapped one upon another about an axis of the tubular core and adhered together.

3. A tubular structure according to Claim 1, wherein the identification device is capable of storing and transmitting data associated with at least one of the tubular structure and the products.

4. A tubular structure according to Claim 1, wherein the identification device includes a coiled antenna and a capacitor.

5. A tubular structure according to Claim 1, wherein the identification device includes a printed carbon-based antenna.

6. A tubular structure according to Claim 1, wherein the flexible band has a unique identifier selected from the group consisting of text and color.

7. A tubular structure according to Claim 1, wherein the flexible band is formed from at least one material of a group consisting of polymers, metals, composites, and paperboard.

8. A tubular structure (10) for storing products, comprising:
a tubular core (12) having inner and outer surfaces (18,10) and opposed ends (14,16) the inner surface defining an inner diameter (D1) of the core; **characterized by**
a resiliently flexible band (30) having opposing ends and side edges (33,35) the flexible band being curled into a cylindrical form so that the opposing side edges are proximate one another, the flexible band having an outer diameter (D4) in a relaxed state that is sized to be greater than the inner diameter of the tubular core, the flexible band being adapted to be flexibly positioned against the inner surface of the tubular core and be secured thereto by an interference fit therebetween; and
a radio frequency identification device (40) capable of storing and transmitting data associated with at least one of the tubular core and the products, the identification device being interposed between the resiliently flexible band and the tubular core.

9. A tubular structure according to Claim 8, wherein the tubular core is formed from multiple layers of paperboard material wrapped one upon another about an axis of the tubular core and adhered together.

10. A tubular structure according to Claim 8, wherein the identification device includes a coiled antenna and a capacitor.

11. A tubular structure according to Claim 8, wherein the identification device includes a printed carbon-based antenna.

12. A tubular structure according to Claim 8, wherein the flexible band has a unique identifier selected from the group consisting of text and color.

13. A tubular structure according to Claim 8, wherein the flexible band is formed from at least one material of a group consisting of polymers, metals, composites, and paperboard.

14. A tubular structure according to Claim 8, wherein the flexible band defines a cavity between the opposing ends thereof, and wherein the identification device is positioned in the cavity.

15. A tubular structure according to Claim 8, wherein the flexible band includes a flange (43) at one of the opposing ends, the flange adapted for registering against one of the opposed ends of the tubular core.

16. A tubular structure (10) for storing products, comprising:
a tubular core (12) having inner and outer surfaces (18,20) and opposed ends, the inner surface defining an inner diameter of the tubular core; **characterized by** (33,35)
a resiliently flexible sheet (30) having opposing ends and side edges positioned in the tubular core and in contact with the inner surface thereof, the flexible sheet defining a distance between the opposing side edges that is greater than the inner diameter of the tubular core so that the flexible sheet is biased against the inner surface of the tubular core and releasably secured thereto by an interference fit therebetween, the flexible sheet having a radio frequency identification device (40) attached thereto capable of storing and transmitting data associated with at least one of the tubular core and the products.

17. A tubular structure according to Claim 16, wherein the tubular core is formed from multiple layers of paperboard material wrapped one upon another about an axis of the tubular core and adhered together.

18. A tubular structure according to Claim 16, wherein the identification device includes a coiled antenna and a capacitor.

19. A tubular structure according to Claim 16, wherein the identification device includes a printed carbon-based antenna.

20. A tubular structure according to Claim 16, wherein the flexible sheet is formed from at least one material of a group consisting of polymers, metals, composites, and paperboard.

21. A method of manufacturing a tubular structure for storing products, the method comprising:
providing a tubular core having inner and outer surfaces and opposed ends; and
releasably securing a resiliently flexible band having opposing side edges and a radio frequency identification device in contact therewith to the tubular core by biasing the resiliently flexible band so that the flexible band and the tubular core form an interference fit therebetween.

22. A method according to Claim 21, wherein the securing step includes biasing the resiliently flexible band about the outer surface of the tubular core so that the identification device is interposed between the flexible band and the outer surface of the tubular core.

23. A method according to Claim 21, wherein the securing step includes biasing the resiliently flexible band against the inner surface of the tubular core so that the identification device is interposed between the flexible band and the inner surface of the tubular core.

24. A method according to Claim 21, wherein the securing step includes biasing the resiliently flexible band against the inner surface of the tubular core so that the opposing side edges are in contact with the inner surface of the tubular core, the flexible band having the identification device attached thereto.

25. A method according to Claim 21, further comprising winding products about the tubular core and storing information about the products in the identification device.

26. A method according to Claim 25, further comprising using the products wound on the tubular core, and removing the flexible band and identification device from the tubular core.

## Patentansprüche

1. Röhrenförmige Struktur (10) zum Aufbewahren von Erzeugnissen (11), die Folgendes umfasst:
einen röhrenförmigen Kern (12), der eine Innen- und eine Außenfläche (18, 20) und entgegengesetzte Enden (14, 16) hat, wobei die Außenfläche einen Außendurchmesser (D2) des röhrenförmigen Kerns definiert, **gekennzeichnet durch**
ein elastisch flexibles Band (30), das gegenüberliegende Seitenkanten (33, 35) hat, wobei das flexible Band zu einer zylindrischen Form eingerollt ist, so dass die gegenüberliegenden Seitenkanten einander nahe sind, wobei das flexible Band in einem entspannten Zustand einen Innendurchmesser (D3) hat, der dafür bemessen ist, geringer zu sein als der Außendurchmesser (D2) des röhrenförmigen Kerns, wobei das flexible Band dafür eingerichtet ist, um die Außenfläche des röhrenförmigen Kerns vorgespannt zu werden und **durch** einen Reibschluss zwischen denselben an demselben befestigt zu werden, und
eine Hochfrequenz-Identifizierungseinrichtung (40), die zwischen dem elastisch flexiblen Band und dem röhrenförmigen Kern eingefügt ist.

2. Röhrenförmige Struktur nach Anspruch 1, wobei der röhrenförmige Kern aus mehreren Lagen aus Pappmaterial geformt ist, die übereinander um eine Achse des röhrenförmigen Kerns gewickelt und aneinander geklebt sind.

3. Röhrenförmige Struktur nach Anspruch 1, wobei die Identifizierungseinrichtung dazu in der Lage ist, Daten, die mit wenigstens einer der Komponenten röhrenförmige Struktur und Erzeugnisse verknüpft sind, zu speichern und zu übermitteln.

4. Röhrenförmige Struktur nach Anspruch 1, wobei die Identifizierungseinrichtung eine Spulenantenne und einen Kondensator einschließt.

5. Röhrenförmige Struktur nach Anspruch 1, wobei die Identifizierungseinrichtung eine gedruckte Antenne auf Kohlenstoffgrundlage einschließt.

6. Röhrenförmige Struktur nach Anspruch 1, wobei das flexible Band eine eindeutige Kennung hat, die aus der Gruppe, die aus Text und Farbe besteht, ausgewählt ist.

7. Röhrenförmige Struktur nach Anspruch 1, wobei das flexible Band aus wenigstens einem Werkstoff aus einer Gruppe, die aus Polymeren, Metallen, Verbundwerkstoffen und Pappe besteht, geformt ist.

8. Röhrenförmige Struktur (10) zum Aufbewahren von Erzeugnissen, die Folgendes umfasst:
einen röhrenförmigen Kern (12), der eine Innen- und eine Außenfläche (18, 20) und entgegengesetzte Enden (14, 16) hat, wobei die Innenfläche einen Innendurchmesser (D1) des röhrenförmigen Kerns definiert, **gekennzeichnet durch**
ein elastisch flexibles Band (30), das gegenüberliegende Enden und Seitenkanten (33, 35) hat, wobei das flexible Band zu einer zylindrischen Form eingerollt ist, so dass die gegenüberliegenden Seitenkanten einander nahe sind, wobei das flexible Band in einem entspannten Zustand einen Außendurchmesser (D4) hat, der dafür bemessen ist, größer zu sein als der Innendurchmesser des röhrenförmigen Kerns, wobei das flexible Band dafür eingerichtet ist, flexibel an der Innenfläche des röhrenförmigen Kerns angeordnet zu werden und **durch** einen Reibschluss zwischen denselben an demselben befestigt zu werden, und
eine Hochfrequenz-Identifizierungseinrichtung (40), die dazu in der Lage ist, Daten, die mit wenigstens einer der Komponenten röhrenförmige Struktur und Erzeugnisse verknüpft sind, zu speichern und zu übermitteln, wobei die Identifizierungseinrichtung zwischen dem elastisch flexiblen Band und dem röhrenförmigen Kern eingefügt ist.

9. Röhrenförmige Struktur nach Anspruch 8, wobei der röhrenförmige Kern aus mehreren Lagen aus Pappmaterial geformt ist, die übereinander um eine Achse des röhrenförmigen Kerns gewickelt und aneinander geklebt sind.

10. Röhrenförmige Struktur nach Anspruch 8, wobei die Identifizierungseinrichtung eine Spulenantenne und einen Kondensator einschließt.

11. Röhrenförmige Struktur nach Anspruch 8, wobei die Identifizierungseinrichtung eine gedruckte Antenne auf Kohlenstoffgrundlage einschließt.

12. Röhrenförmige Struktur nach Anspruch 8, wobei das flexible Band eine eindeutige Kennung hat, die aus der Gruppe, die aus Text und Farbe besteht, ausgewählt ist.

13. Röhrenförmige Struktur nach Anspruch 8, wobei das flexible Band aus wenigstens einem Werkstoff aus einer Gruppe, die aus Polymeren, Metallen, Verbundwerkstoffen und Pappe besteht, geformt ist.

14. Röhrenförmige Struktur nach Anspruch 8, wobei das flexible Band einen Hohlraum zwischen den gegenüberliegenden Enden desselben definiert und wobei die Identifizierungseinrichtung in dem Hohlraum angeordnet ist.

15. Röhrenförmige Struktur nach Anspruch 8, wobei das flexible Band einen Flansch (43) an einem der gegenüberliegenden Enden einschließt, wobei der Flansch dafür eingerichtet ist, sich gegen eines der entgegengesetzten Enden des röhrenförmigen Kerns auszurichten.

16. Röhrenförmige Struktur (10) zum Aufbewahren von Erzeugnissen, die Folgendes umfasst:
einen röhrenförmigen Kern (12), der eine Innen- und eine Außenfläche (18, 20) und entgegengesetzte Enden hat, wobei die Innenfläche einen Innendurchmesser des röhrenförmigen Kerns definiert, **gekennzeichnet durch**
eine elastisch flexible Bahn (30), die gegenüberliegende Enden und Seitenkanten (33, 35) hat, angeordnet in dem röhrenförmigen Kern und in Berührung mit der Innenfläche desselben, wobei die flexible Bahn einen Abstand zwischen den gegenüberliegenden Seitenkanten definiert, der größer ist als der Innendurchmesser des röhrenförmigen Kerns, so dass die flexible Bahn gegen die Innenfläche des röhrenförmigen Kerns vorgespannt wird und **durch** einen Reibschluss zwischen denselben lösbar an demselben befestigt wird, wobei die flexible Bahn eine an derselben befestigte Hochfrequenz-Identifizierungseinrichtung (40) hat, die dazu in der Lage ist, Daten, die mit wenigstens einer der Komponenten röhrenförmige Struktur und Erzeugnisse verknüpft sind, zu speichern und zu übermitteln.

17. Röhrenförmige Struktur nach Anspruch 16, wobei der röhrenförmige Kern aus mehreren Lagen aus Pappmaterial geformt ist, die übereinander um eine Achse des röhrenförmigen Kerns gewickelt und aneinander geklebt sind.

18. Röhrenförmige Struktur nach Anspruch 16, wobei die Identifizierungseinrichtung eine Spulenantenne und einen Kondensator einschließt.

19. Röhrenförmige Struktur nach Anspruch 16, wobei die Identifizierungseinrichtung eine gedruckte Antenne auf Kohlenstoffgrundlage einschließt.

20. Röhrenförmige Struktur nach Anspruch 16, wobei die flexible Bahn aus wenigstens einem Werkstoff aus einer Gruppe, die aus Polymeren, Metallen, Verbundwerkstoffen und Pappe besteht, geformt ist.

21. Verfahren zum Herstellen einer röhrenförmigen Struktur zum Aufbewahren von Erzeugnissen, wobei das Verfahren Folgendes umfasst:
das Bereitstellen eines röhrenförmigen Kerns, der eine Innen- und eine Außenfläche und entgegengesetzte Enden hat, und
das lösbare Befestigen eines elastisch flexiblen Bandes, das gegenüberliegende Seitenkanten und eine Hochfrequenz-Identifizierungseinrichtung in Kontakt mit demselben hat, an dem röhrenförmigen Kern durch das Vorspannen des elastisch flexiblen Bandes, so dass das flexible Band und der röhrenförmige Kern einen Reibschluss zwischen denselben bilden.

22. Verfahren nach Anspruch 21, wobei der Befestigungsschritt das Vorspannen des elastisch flexiblen Bandes um die Außenfläche des röhrenförmigen Kerns einschließt, so dass die Identifizierungseinrichtung zwischen dem flexiblen Band und der Außenfläche des röhrenförmigen Kerns eingefügt wird.

23. Verfahren nach Anspruch 21, wobei der Befestigungsschritt das Vorspannen des elastisch flexiblen Bandes gegen die Innenfläche des röhrenförmigen Kerns einschließt, so dass die Identifizierungseinrichtung zwischen dem flexiblen Band und der Innenfläche des röhrenförmigen Kerns eingefügt wird.

24. Verfahren nach Anspruch 21, wobei der Befestigungsschritt das Vorspannen des elastisch flexiblen Bandes gegen die Innenfläche des röhrenförmigen Kerns einschließt, so sich dass die gegenüberliegenden Seitenkanten in Berührung mit der Innenfläche des röhrenförmigen Kerns befinden, wobei das flexible Band die Identifizierungseinrichtung an demselben befestigt hat.

25. Verfahren nach Anspruch 21, das ferner das Wickeln von Erzeugnissen um den röhrenförmigen Kern und das Speichern von Informationen über die Erzeugnisse in der Identifizierungseinrichtung umfasst.

26. Verfahren nach Anspruch 25, das ferner das Verwenden der auf den röhrenförmigen Kern gewickelten Erzeugnisse und das Entfernen des flexiblen Bandes und der Identifizierungseinrichtung von dem röhrenförmigen Kern umfasst.

## Revendications

1. Structure tubulaire (10) pour stocker des produits (11), comprenant :
un mandrin tubulaire (12), comportant des surfaces interne et externe (18, 20) et des extrémités opposées (14, 16), la surface externe définissant un diamètre extérieur (D2) du mandrin tubulaire, **caractérisée par**
une bande à flexibilité élastique (30), comportant des bords latéraux opposés (33, 35), la bande flexible étant bouclée en une forme cylindrique, de sorte que les bords latéraux opposés sont proches l'un de l'autre, la bande flexible ayant un diamètre intérieur (D3) dans un état détendu, dimensionné de sorte à être inférieur au diamètre extérieur du mandrin tubulaire (D2), la bande flexible étant adaptée pour être poussée autour de la surface externe du mandrin tubulaire et pour être fixée sur celle-ci par ajustement par frottement entre eux ; et
un dispositif d'identification par radiofréquence (40) agencé entre la bande à flexibilité élastique et le mandrin tubulaire.

2. Structure tubulaire selon la revendication 1, dans laquelle le mandrin tubulaire est formé par de multiples couches de matériau de carton, enroulées les unes sur les autres autour d'un axe du mandrin tubulaire et adhérant les unes aux autres.

3. Structure tubulaire selon la revendication 1, dans laquelle le dispositif d'identification est capable d'enregistrer et de transmettre des données associées à au moins la structure tubulaire ou aux produits.

4. Structure tubulaire selon la revendication 1, dans laquelle le dispositif d'identification englobe une antenne enroulée et un condensateur.

5. Structure tubulaire selon la revendication 1, dans laquelle le dispositif d'identification englobe une antenne en matériau imprimé à base de carbone.

6. Structure tubulaire selon la revendication 1, dans laquelle la bande flexible comporte un identificateur unique sélectionné dans le groupe constitué de texte et de couleurs.

7. Structure tubulaire selon la revendication 1, dans laquelle la bande flexible est formée à partir d'au moins un matériau sélectionné dans un groupe constitué de polymères, de métaux, de composites et de carton.

8. Structure tubulaire (10) pour stocker des produits, comprenant :
un mandrin tubulaire (12), comportant des surfaces interne et externe (18, 20) et des extrémités opposées (14, 16), la surface externe définissant un diamètre intérieur (D1) du mandrin, **caractérisé par**
une bande à flexibilité élastique (30), comportant des extrémités opposées et des bords latéraux opposés (33, 35), la bande flexible étant bouclée en une forme cylindrique, de sorte que les bords latéraux opposés sont proches l'un de l'autre, la bande flexible ayant un diamètre extérieur (D4) dans un état détendu, dimensionné de sorte à être supérieur au diamètre intérieur du mandrin tubulaire, la bande flexible étant adaptée pour être poussée autour de la surface externe du mandrin tubulaire et pour être fixée sur celle-ci par ajustement par frottement entre eux ; et
un dispositif d'identification par radiofréquence (40), capable d'enregistrer et de transmettre des données associées au moins au mandrin tubulaire ou aux produits, le dispositif d'identification étant agencé entre la bande à flexibilité élastique et le mandrin tubulaire.

9. Structure tubulaire selon la revendication 8, dans laquelle le mandrin tubulaire est formé à partir de multiples couches de matériau de carton enroulées les unes sur les autres autour d'un axe du mandrin tubulaire et adhérant les unes aux autres.

10. Structure tubulaire selon la revendication 8, dans laquelle le dispositif d'identification englobe une antenne enroulée et un condensateur.

11. Structure tubulaire selon la revendication 8, dans laquelle le dispositif d'identification englobe une antenne en matériau imprimé à base de carbone.

12. Structure tubulaire selon la revendication 8, dans laquelle la bande flexible comporte un identificateur unique sélectionné dans le groupe constitué de texte et de couleurs.

13. Structure tubulaire selon la revendication 8, dans laquelle la bande flexible est formée à partir d'au moins un matériau sélectionné dans le groupe constitué de polymères, de métaux, de composites et de carton.

14. Structure tubulaire selon la revendication 8, dans laquelle la bande flexible définit une cavité entre ses extrémités opposées, le dispositif d'identification étant positionné dans la cavité.

15. Structure tubulaire selon la revendication 8, dans laquelle la bande flexible englobe une bride (43) au niveau de l'une des extrémités opposées, la bride étant adaptée pour être alignée contre l'une des extrémités opposées du mandrin tubulaire.

16. Structure tubulaire (10) pour stocker des produits, comprenant :
un mandrin tubulaire (12), comportant des surfaces interne et externe (18, 20) et des extrémités opposées, la surface interne définissant un diamètre intérieur du mandrin tubulaire ; **caractérisée par** :
une feuille à flexibilité élastique (30), comportant des extrémités opposées et des bords latéraux (33, 35), positionnée dans le mandrin tubulaire et en contact avec la surface interne de celui-ci, la feuille flexible définissant une distance entre les bords latéraux opposés, supérieure au diamètre intérieur du mandrin tubulaire, de sorte que la feuille flexible soit poussée contre la surface intérieure du mandrin tubulaire et étant fixée de manière amovible sur celui-ci par ajustement serré entre eux, la feuille flexible comportant un dispositif d'identification par radiofréquence (40) qui y est fixé, capable d'enregistrer et de transmettre des données associées à au moins le mandrin tubulaire ou aux produits.

17. Structure tubulaire selon la revendication 16, dans lequel le mandrin tubulaire est formé à partir de multiples couches de matériau de carton enroulées les unes sur les autres autour d'un axe du mandrin tubulaire et adhérant les unes aux autres.

18. Structure tubulaire selon la revendication 16, dans laquelle le dispositif d'identification englobe une antenne enroulée et un condensateur.

19. Structure tubulaire selon la revendication 16, dans laquelle le dispositif d'identification englobe une antenne en matériau imprimé à base de carbone.

20. Structure tubulaire selon la revendication 16, dans laquelle la feuille flexible est formée à partir d'au moins un matériau sélectionné dans un groupe constitué d polymères, de métaux, de composites et de carton.

21. Procédé de fabrication d'une structure tubulaire pour stocker des produits, le procédé comprenant les étapes ci-dessous :
fourniture d'un mandrin tubulaire comportant des surfaces interne et externe et des extrémités opposées ; et
fixation amovible d'une bande flexible et élastique comportant des bords latéraux opposés et un dispositif d'identification par radiofréquence en contact avec ceux-ci, sur le mandrin tubulaire en poussant la bande à flexibilité élastique de sorte que la bande flexible et le mandrin tubulaire forment un ajustement serré entre eux.

22. Procédé selon la revendication 21, dans lequel l'étape de fixation englobe la poussée de la bande à flexibilité élastique autour de la surface externe du mandrin tubulaire, le dispositif d'identification étant ainsi agencé entre la bande flexible et la surface externe du mandrin tubulaire.

23. Procédé selon la revendication 21, dans lequel l'étape de fixation englobe la poussée de la bande à flexibilité élastique contre la surface interne du mandrin tubulaire, de sorte que le dispositif d'identification est agencé entre la bande flexible et la surface interne du mandrin tubulaire.

24. Procédé selon la revendication 21, dans lequel l'étape de fixation englobe la poussée de la bande à flexibilité élastique contre la surface interne du mandrin tubulaire, de sorte que les bords latéraux opposés sont en contact avec la surface interne du mandrin tubulaire, la bande flexible comportant un dispositif d'identification qui y est fixé.

25. Procédé selon la revendication 21, comprenant en outre l'étape d'enroulement de produits autour du mandrin tubulaire et de stockage d'informations concernant les produits dans le dispositif d'identification.

26. Procédé selon la revendication 25, comprenant en outre les étapes d'utilisation des produits enroulés sur le mandrin tubulaire et de retrait de la bande flexible et du dispositif d'identification du mandrin tubulaire.
